# EUROPÄISCHE PATENTSCHRIFT

(11) **EP 1 886 460 B1**
(45) Veröffentlichungstag und Bekanntmachung des Hinweises auf die Patenterteilung: **11.07.2018**
(21) Anmeldenummer: 06725295.7
(22) Anmeldetag: 24.03.2006
(51) Int. Cl.: H04L 29/06

(54) **VERFAHREN ZUR VERSCHLÜSSELTEN ÜBERTRAGUNG VON SYNCHRONISIERUNGS-NACHRICHTEN**
METHOD FOR THE ENCRYPTED TRANSMISSION OF SYNCHRONIZATION MESSAGES
PROCEDE DE TRANSMISSION CODEE DE MESSAGES DE SYNCHRONISATION

(30) Priorität: 31.05.2005 DE 102005025328
(43) Veröffentlichungstag der Anmeldung: 13.02.2008
(73) Patentinhaber: Siemens Aktiengesellschaft, 80333 München (DE)
(72) Erfinder: SCHÜLER, Stephan, 58454 Witten (DE)
(86) Internationale Anmeldenummer: PCT/EP2006/061024
(87) Internationale Veröffentlichungsnummer: WO 2006/128748

(56) Entgegenhaltungen:
- US-A1- 2003 167 394
- DAVID L MILLS UNIVERSITY OF DELAWARE: "Network Time Protocol (Version 3) Specification, Implementation and Analysis; rfc1305.txt" IETF STANDARD, INTERNET ENGINEERING TASK FORCE, IETF, CH, März 1992 (1992-03), XP015007092 ISSN: 0000-0003
- IEC 61588: "IEEE 1588: precision clock synchronization protocol for networked measurement and control systems" INTERNATIONAL STANDARD - IEC, NEW YORK, NY, US, Nr. 61588, September 2004 (2004-09), Seite complete, XP002367391
- POSTEL ISI J: "DARPA INTERNET PROGRAM PROTOCOL SPECIFICATION INTERNET CONTROL MESSAGE PROTOCOL; rfc792.txt" IETF STANDARD, INTERNET ENGINEERING TASK FORCE, IETF, CH, September 1981 (1981-09), XP015006774 ISSN: 0000-0003

## Beschreibung

Die Erfindung betrifft ein Verfahren zur Übertragung von Synchronisierungs-Nachrichten gemäß des Oberbegriffs des Patentanspruchs 1.

In verteilten Kommunikations- oder Datenverarbeitungssystemen werden hohe Anforderungen an die Zeitsynchronität von dessen Komponenten gestellt. Die Zeittaktgeber dieser Komponenten werden häufig durch den Austausch von mit Zeitstempeln versehenen Datenpaketen über ein asynchrones Netzwerk miteinander oder mit einem über das asynchrone Netzwerk erreichbaren Referenzzeitgeber synchronisiert.

Als Protokoll zur Takt- und Phasensynchronisation von Zeittaktgebern über asynchrone Netzwerke wird gegenwärtig das sog. PTP-Protokoll (PTP: Precision Time Protocol) verwendet, welches im Standard IEEE-1588 (IEEE: "Institute of Electrical and Electronical Engineers") definiert ist. Dabei werden PTP-Nachrichten beispielsweise mit Hilfe von Datenpaketen, die dem Internet-Protokoll genügen, über das asynchrone Netzwerk ausgetauscht.

Die PTP-Nachrichten werden bislang vornehmlich in Netzwerken und Netzsegmenten eingesetzt, die sowohl geographisch als auch logisch von einer geringen Größe sind. Neue Techniken, insbesondere bei aktiven Netzelementen (Switche, Router, etc.) machen es jedoch möglich, PTP-Nachrichten auch in größeren Netzwerken mit einer hohen Zahl von "Teilnehmern", also Netzelementen, einzusetzen. Dabei hat sich jedoch als nachteilig erwiesen, dass die PTP-Nachrichten "abgehört" werden können. So sind als Hilfsmittel ("Tools") sog. "Sniffer" bekannt, mit denen der gesamte Datenverkehr in einem Netzwerk oder Netzsegment ausgespäht werden kann. Aus einer dabei vorgenommenen missbräuchlichen Analyse der registrierten (abgehörten) PTP-Nachrichten kann dabei auf die Funktion und Arbeitsweise anderer Netzelemente geschlossen werden, was ein Problem für die Datensicherheit darstellen kann. Außerdem ist es möglich, PTP-Nachrichten zu "fälschen" und damit die Funktionsweise anderer Netzelemente zu stören. Schließlich können auch "echte" PTP-Nachrichten aufgezeichnet und wiederholt missbräuchlich in das Netzwerk bzw. Netzsegment eingebracht werden, wodurch ebenfalls die Funktion anderer Netzelemente gestört wird. Letztgenannte missbräuchliche Vorgänge sind auch als "Denial-of-Service-Angriffe" bekannt.

Das Dokument US20020167394 offenbart einen Sender, der dem Empfänger über eine Übertragungskanal die Parameter zum Absichern der Übertragung mitteilt, also die Art der Verschlüsselung, die Parameter zur Schlüsselgenerierung und Zufallswerte zur Verschlüsselung / Entschlüsselung oder Authentifizierung. Falls zu übertragende Datenblöcke nicht die volle Paketlänge aufweisen, wird die betroffenen Pakete gepaddet.

Es ist also eine Aufgabe der Erfindung, die Sicherheit bei der Verwendung von PTP-Nachrichten zur erhöhen.

Die Aufgabe wird durch den Einsatz eines Verfahrens gemäß des Patentanspruchs 1 gelöst.

Dabei wird zur Übertragung von Synchronisierungs-Nachrichten, beispielsweise PTP-Nachrichten gemäß des IEEE-1588-Standards, die PTP-Nachricht in ein Datenpaket gemäß des Internet-Protokolls eingefügt, wobei das Datenpaket einen IP-Header aufweist, und wobei das Datenpaket einen UDP-Header aufweist. Zur verschlüsselten Übertragung der PTP-Nachricht wird das Datenpaket an einen für verschlüsselte PTP-Nachrichten reservierten UDP-Port adressiert, das Datenpaket wird mit einem zusätzlichen für die Verschlüsselung vorgesehenen S-PTP-Header ausgestattet, die PTP-Nachricht wird um eine Pseudo-Zufallszahl erweitert und die PTP-Nachricht wird zusammen mit der Pseudo-Zufallszahl verschlüsselt. Durch die Verschlüsselung des Nutzinhaltes der Datenpakete wird zum einen verhindert, dass der Inhalt der Datenpakete, also die PTP-Nachrichten, von unbefugter Seite gelesen werden können, und zum anderen wird verhindert, dass gefälschte PTP-Nachrichten in das Netzwerk eingebracht und dort Schaden anrichten können, weil eine gefälschte PTP-Nachricht entweder nicht entschlüsselt wird, oder nach der Entschlüsselung einen nicht-sinnvollen Inhalt aufweist. Darüber hinaus verhindert das Einfügen einer Pseudo-Zufallszahl zum einen, dass "echte" Datenpakete missbräuchlich aufgezeichnet (registriert) und wiederholt an den Empfänger versendet werden, weil beim Empfänger geprüft werden kann, ob aufeinander folgende eintreffende Synchronisierungs-Nachrichten (PTP-Nachrichten) mit unterschiedlichen Pseudo-Zufallszahlen versehen sind. Zum anderen erschwert die Zugabe von Pseudo-Zufallszahlen eine missbräuchliche Rückgewinnung des verwendeten Schlüssels, weil auch in den Fällen, in denen die Absendezeit der PTP-Nachrichten und damit der Nutzinhalt bekannt ist, der gesamte Klartext-Inhalt der PTP-Nachrichten nicht geschätzt werden kann und somit ein Vergleich des geschätzten Inhalts mit der verschlüsselten Nachricht nicht zur missbräuchlichen Rückgewinnung der verwendeten Schlüssels verwendet werden kann.

Praktischer Weise wird jedes Datenpaket mit einer verschlüsselten PTP-Nachricht an einen speziell für solche Nachrichten vorgesehenen "Port" (UDP-Port) der empfangenden Komponente oder Komponenten adressiert. Dadurch wird sichergestellt, dass verschlüsselte und nicht-verschlüsselte PTP-Nachrichten jeweils bestimmungsgemäß verarbeitet werden. Ein zusätzlicher mit der PTP-Nachricht übertragener Header, der sog. S-PTP-Header, kennzeichnet das verwendete Verschlüsselungsverfahren. Dieser S-PTP-Header kann dabei auch zusätzliche Angaben enthalten, beispielsweise über die Größe der verwendeten Pseudo-Zufallszahl (also die Anzahl der dafür verwendeten Bit-Stellen).

Vorteilhafte Ausgestaltungen des erfindungsgemäßen Verfahrens sind in den Unteransprüchen angegeben.

Es hat sich als vorteilhaft erwiesen, wenn der aus den Pseudo-Zufallszahlen und der PTP-Nachricht bestehende und zu verschlüsselnde Datenblock durch ein Füllmuster erweitert wird, wobei das Füllmuster derart bemessen ist, dass der zu verschlüsselnde Block eine vordefinierte Blockgröße aufweist. Dadurch lassen sich auch solche Verschlüsselungsverfahren einsetzen, die vorteilhaft mit Nutzdaten arbeiten, die eine bestimmte Anzahl an Bits oder Bytes aufweisen, beispielsweise 64 Bit oder ein Vielfaches davon. Außerdem wird durch das Auffüllen auf konstante Blockgrößen die Sicherheit weiter erhöht, weil damit ein Rückschluss von der Länge einer abgehörten Nachricht auf ihren Inhalt erschwert oder verhindert wird. Angaben über das Auffüllen der PTP-Nachricht können vorteilhaft in den S-PTP-Header aufgenommen werden, wobei entweder allein eine Information darüber gespeichert wird, dass ein Füllmuster verwendet wurde, oder aber auch die Art oder Größe des Füllmusters angegeben wird.

Besonders geeignet sind symmetrische VerschlüsselungsVerfahren, beispielsweise das Triple-Data-Encryption-Standard (3DES)-Verfahren. Diese Verfahren haben den Vorteil, dass die Verschlüsselung und die Entschlüsselung der Nutzdaten (PTP-Nachricht) eine relativ kurze und dabei konstante Zeitdauer in Anspruch nimmt. Damit kann das Übertragungsverfahren auch in solchen Anordnungen eingesetzt werden, in denen häufig Komponenten miteinander synchronisiert werden müssen und es darüber hinaus auf eine schnelle Synchronisierung der Komponenten ankommt.

In Netzwerken wird häufig zwischen verschiedenen Arten von PTP-Nachrichten unterschieden. Zum einen sind PTP-Nachrichten mit den Zeitinformationen ("Zeitstempel-Nachrichten") bekannt, die der tatsächlichen Synchronisation von Komponenten dienen. Zum anderen sind auch Administrations-Nachrichten bekannt, die der Administration von PTP-Netzwerk-Ports und der Konfiguration von anderen PTP-bezogenen Einstellungen der Komponenten dienen. Das Verfahren wird vorteilhaft für alle Arten von PTP-Nachrichten eingesetzt, wobei es sich als vorteilhaft erwiesen hat, für die Administrationsnachrichten und für die Zeitstempel-Nachrichten jeweils unterschiedliche Schlüssel zu verwenden. So werden häufig PTP-Zeitstempel-Nachrichten gleichzeitig an mehrere empfangende Komponenten versendet (man spricht auch von Broadcast- und Multicast-Nachrichten), wobei jede dieser empfangenden Komponenten den Schlüssel zur Entschlüsselung der Zeitstempel-Nachrichten aufweisen muss. In vielen Fällen ist es jedoch gewünscht, für die Administration jeder zur administrierenden Komponente einen abweichenden und unterschiedlichen Schlüssel zuzuweisen, wodurch die Sicherheit für die besonders sensible Administration von Komponenten erhöht wird.

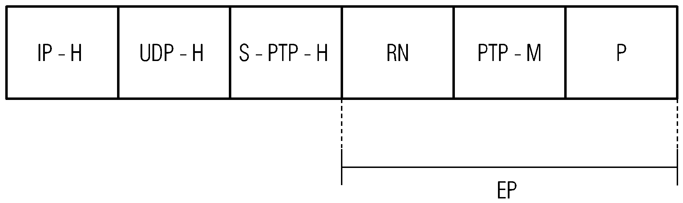

Das erfindungsgemäße Verfahren wird nachfolgend anhand der Zeichnung näher erläutert.

Dabei zeigt die einzige Figur den schematischen Aufbau eines Datenpaketes mit einer zu verschlüsselnden PTP-Nachricht.

In der Figur ist ein Datenpaket dargestellt, mit dessen Hilfe eine Synchronisierungs-Nachricht, hier eine PTP-Nachricht PTP-M ("Precision-Time-Protocol-Message"), in einem (nicht dargestellten) Datennetz übertragen werden soll. Bei dem Datennetz handelt es sich hier um ein Netzsegment eines LAN (Local Area Network), beispielsweise in einer Fertigungsanlage, in der verschiedene Produktionsmaschinen miteinander synchronisiert werden müssen. Anstelle des hier exemplarisch betrachteten IEEE-1588-Protokolls können auch andere Synchronisierungs-Nachrichten eines anderen Protokolls eingesetzt werden.

Im vorliegenden Ausführungsbeispiel wird von einem symmetrischen Verschlüsselungsverfahren ausgegangen, d.h., dass sowohl die sendende Komponente ("Time-Master") als auch die empfangende Komponente ("Time-Slave") von einem Administrator mit demselben Schlüssel ausgestattet wurden, wobei dieser Schlüssel sowohl für die Verschlüsselung als auch für die Entschlüsselung von Daten verwendet wird.

Die zur Übertragung der PTP-Nachricht PTP-M verwendeten Datenpakete sind gemäß des Internet-Protokolls aufgebaut, also sog. IP-Datagramme. Deshalb besitzt jedes Datenpaket einen sog. IP-Header IP-H, der aus dem Stand der Technik hinreichend bekannt ist und daher an dieser Stelle nicht näher beschrieben wird. PTP-Nachrichten werden mit dem IP-Verfahren "UDP" (User Datagram Protocol) übermittelt; man spricht dabei auch von einer ungesicherten Datenübertragung. UDP-Übertragungen sind zwar mit dem Nachteil behaftet, dass Datenpakete "unbemerkt" verloren gehen können, aber haben den Vorteil, dass die Übermittlung schnell und einfach vonstatten geht. Für das UDP-Übertragungsverfahren weist das Datenpaket einen weiteren Header, den UDP-Header UDP-H auf. Bei der aus dem Stand der Technik bekannten Übertragung von PTP-Nachrichten schließt sich an den UDP-Header UDP-H die (eigentliche) PTP-Nachricht PTP-M an. Im Folgenden wird beschrieben, wie diese PTP-Nachricht PTP-M aus Sicherheitsgründen verschlüsselt übermittelt wird.

Die Behandlung, also die Generierung, der Versand, der Empfang und die Auswertung von PTP-Nachrichten wird in den Komponenten mit Protokoll-Stacks, den sog. PTP-Stacks vorgenommen. Für die Verschlüsselung (Chiffrierung) und die Entschlüsselung (Dechiffrierung) der PTP-Nachrichten werden die Protokoll-Stacks um entsprechende Funktionen erweitert. Der Vorteil liegt darin, dass Anwendungsprogramme auf den so modifizierten Protokoll-Stack in der gleichen Weise zugreifen können, wie auf unveränderte Protokoll-Stacks. Die Administration der geänderten Protokoll-Stacks kann dabei zum einen lokal an der Komponente (PC, Maschine, etc.) erfolgen, oder aber über entsprechend gestaltete PTP-Administrations-Nachrichten, die vorteilhaft ebenfalls durch das nachfolgend beschriebene Verfahren verschlüsselt werden.

Die zu verschlüsselnde PTP-Nachricht PTP-M wird zunächst um eine Pseudo-Zufallszahl RN ergänzt. Pseudo-Zufallszahlen RN werden mit Hilfe allgemein bekannter Algorithmen aus verschiedenen Startwerten, beispielsweise einer Uhrzeitinformation, einer vorhergehenden Pseudo-Zufallszahl RN und anderen Werten gebildet. In diesem Beispiel wird die Pseudo-Zufallszahl RN der PTP-Nachricht PTP-M vorangestellt; selbstverständlich kann auch eine andere Anordnung gewählt werden. Die derart erweiterte PTP-Nachricht PTP-M wird weiter mit einer Anzahl von Füll-Bits, dem sog. Füllmuster P, ergänzt. Dieses Füllmuster P wird so groß bemessen, dass die PTP-Nachricht PTP-M zusammen mit der Pseudo-Zufallszahl RN und dem Füllmuster P eine Größe (Blockgröße) von 64 Bit oder ein Vielfaches davon aufweist. Das liegt daran, dass das verwendete Kryptographie-Verfahren 3DES (Triple-Data-Encryption-Standard) immer komplette Blöcke der Größe 64 Bit verschlüsselt. Bei anderen Verschlüsselungsverfahren kann auch eine andere Blockgröße erforderlich sein, oder aber auch das Füllmuster P entfallen. Die Pseudo-Zufallszahl RN hat in diesem Ausführungsbeispiel eine Länge von 32 Bit, auch hier sind andere Größen denkbar.

Die zu verschlüsselnden Daten EN ("Encrypted Portion") bestehen also aus der Pseudo-Zufallszahl RN, der PTP-Nachricht PTP-M und dem Füllmuster P . Zu diesen zu verschlüsselnden Daten EN wird nun ein zusätzlicher Header, der S-PTP-Header S-PTP-H erzeugt. Er enthält hier zum einen eine Kennung für das verwendete Verschlüsselungsverfahren 3DES und eine Angabe ("Flag") darüber, dass ein Füllmuster P verwendet wird, bzw. wurde. Alternativ kann in dem S-PTP-Header S-PTP-H auch angegeben sein, wie viele Bits die Pseudo-Zufallszahl RN umfasst, wie viele Bits der PTP-Nachricht PTP-M zuzuordnen sind, und wie viele Bits dem Füllmuster P angehören. Je mehr Angaben in dem S-PTP-Header S-PTP-H verzeichnet sind, desto flexibler lässt sich das gesamte Verschlüsselungsverfahren definieren. Andererseits gehen allzu ausführliche Angaben zu Lasten der Sicherheit.

Der jetzt gebildete S-PTP-Header S-PTP-H bildet zusammen mit den nun verschlüsselten Daten die Nutzlast für ein IP/UDP-Datagramm. Also werden dem S-PTP-Header S-PTP-H und den verschlüsselten Daten ein "klassischer" IP-Header IP-H und UDP-Header UDP-H voran gestellt. Dabei ist in diesem Ausführungsbeispiel das IP-Datagramm an einen speziell für verschlüsselte PTP-Nachrichten PTP-M reservierten UDP-Port der empfangenden Komponente adressiert. Alternativ kann auch der für unverschlüsselte PTP-Nachrichten PTP-M reservierte UDP-Port verwendet werden. Dann muss der PTP-Stack der empfangenden Komponente jedoch alle eingehenden PTP-Nachrichten PTP-M dahingehend untersuchen, ob sie verschlüsselt sind oder nicht.

Anstelle des geschilderten symmetrischen Verschlüsselungsverfahrens können auch asymmetrische Verschlüsselungsverfahren eingesetzt werden. So können beispielsweise von einem empfängerseitig vorliegenden "Master-Key", also von einem privaten Schlüssel, mehrere Schlüssel abgeleitet werden, die beispielsweise nur für eine einzige Sitzung ("Session") verwendet werden. Weiter werden für PTP-Nachrichten PTP-M, die Zeitstempel enthalten und daher regelmäßig versendet werden und dabei auch oft an mehrere Komponenten adressiert werden (Multicast/Broadcast), andere Schlüssel verwendet, als für PTP-Nachrichten PTP-M, die zu Administrationszwecken an einzelne Komponenten versendet werden. Die Verfahren zur Erzeugung und Verwaltung von Schlüsselmaterial sind im Stand der Technik hinlänglich bekannt und werden daher an dieser Stelle nicht weiter ausgeführt.

## Patentansprüche

1. Verfahren zur verschlüsselten Übertragung von Synchronisierungs-Nachrichten (PTP-M),
wobei eine Synchronisierungs-Nachricht (PTP-M) in ein Datenpaket gemäß dem Internet-Protokoll eingefügt wird, wobei das Datenpaket einen IP-Header (IP-H) aufweist, und wobei das Datenpaket einen UDP-Header (UDP-H) aufweist, **dadurch gekennzeichnet, dass**
zur verschlüsselten Übertragung der Synchronisierungs-Nachricht (PTP-M) das Datenpaket an einen für verschlüsselte Synchronisierungs-Nachrichten (PTP-M) reservierten UDP-Port adressiert wird,
dass das Datenpaket mit einem zusätzlichen für die Verschlüsselung vorgesehenen S-PTP-Header (S-PTP-H) ausgestattet wird,
dass die Synchronisierungs-Nachricht (PTP-M) um eine Pseudo-Zufallszahl (RN) erweitert wird, und
dass die Synchronisierungs-Nachricht (PTP-M) zusammen mit der Pseudo-Zufallszahl (RN) verschlüsselt wird.

2. Verfahren nach Patentanspruch 1,
**dadurch gekennzeichnet, dass**
der aus der Pseudo-Zufallszahl (RN) und der Synchronisierungs-Nachricht (PTP-M) bestehende und zu verschlüsselnde Datenblock (EP) durch ein Füllmuster (P) erweitert wird, wobei das Füllmuster (P) derart bemessen ist, dass der zu verschlüsselnde Datenblock (EP) eine vordefinierte Blockgröße erreicht.

3. Verfahren nach Patentanspruch 2,
**dadurch gekennzeichnet, dass**
als die vordefinierte Blockgröße 64 Bit oder ein Vielfaches davon gewählt wird.

4. Verfahren nach einem der vorhergehenden Patentansprüche,
**dadurch gekennzeichnet, dass**
der S-PTP-Header (S-PTP-H) zumindest Angaben über den verwendeten Verschlüsselungs-Algorithmus und ggf. Angaben über die Verwendung eines Füllmusters (P) umfasst.

5. Verfahren nach einem der vorhergehenden Patentansprüche,
**dadurch gekennzeichnet, dass**
für die Verschlüsselung ein symmetrisches Verschlüsselungsverfahren verwendet wird.

6. Verfahren nach einem der vorhergehenden Patentansprüche,
**dadurch gekennzeichnet, dass**
als die Synchronisierungs-Nachricht (PTP-M) eine PTP-Zeitstempel-Nachricht mit einer Zeitstempel-Information und/oder eine PTP-Administrations-Nachricht zur Administration von PTP-Netzwerk-Ports verwendet werden.

7. Verfahren nach Patentanspruch 6,
**dadurch gekennzeichnet, dass**
in den Fällen, in denen sowohl Synchronisierungs-Nachrichten (PTP-M) mit PTP-Zeitstempel-Nachrichten als auch Synchronisierungs-Nachrichten (PTP-M) mit PTP-Administrations-Nachrichten verschlüsselt übertragen werden, für die Verschlüsselung von PTP-Zeitstempel-Nachrichten und für die Verschlüsselung von PTP-Administrations-Nachrichten jeweils unterschiedliche Schlüssel verwendet werden.

8. Verfahren nach einem der Patentansprüche 2 bis 7,
**dadurch gekennzeichnet, dass**
zur Laufzeitmessung zwischen einer ersten und einer zweiten Komponente eine erste verschlüsselte Synchronisierungs-Nachricht (PTP-M) von der ersten zu der zweiten Komponente versendet wird,
dass eine zweite verschlüsselte Synchronisierungs-Nachricht (PTP-M) als Antwort von der zweiten zu der ersten Komponente versendet wird,
wobei die Gesamt-Laufzeit der ersten und der zweiten verschlüsselten Synchronisierungs-Nachricht (PTP-M) gemessen wird, und
wobei die Füllmuster (P) der ersten und der zweiten Synchronisierungs-Nachricht (PTP-M) derart gewählt werden, dass die erste und die zweite verschlüsselte Synchronisierungs-Nachricht (PTP-M) jeweils dieselbe Blockgröße aufweisen.

## Claims

1. Method for encrypted transmission of synchronization messages (PTP-M), where a synchronization message (PTP-M) is inserted into a data packet based on the Internet Protocol, where the data packet has an IP header (IP-H), and
where the data packet has a UDP header (UDP-H),
**characterized in that**
encrypted transmission of the synchronization message (PTP-M) involves the data packet being sent to a UDP port reserved for encrypted synchronization messages (PTP-M),
**in that** the data packet is equipped with an additional S-PTP header (S-PTP-H) provided for the encryption,
**in that** the synchronization message (PTP-M) is extended by a pseudo random number (RN), and
**in that** the synchronization message (PTP-M) is encrypted together with the pseudo random number (RN).

2. Method according to Patent Claim 1,
**characterized in that**
the data block (EP) which comprises the pseudo random numbers (RN) and the synchronization message (PTP-M) and which is to be encrypted is extended by a filler pattern (P), the proportions of the filler pattern (P) being such that the data block (EP) to be encrypted reaches a predefined block size.

3. Method according to Patent Claim 2,
**characterized in that**
the predefined block size chosen is 64 bits or a multiple thereof.

4. Method according to one of the preceding patent claims,
**characterized in that**
the S-PTP header (S-PTP-H) comprises at least statements about the encryption algorithm used and possibly statements about the use of a filler pattern (P).

5. Method according to one of the preceding patent claims,
**characterized in that**
a symmetrical encryption method is used for the encryption.

6. Method according to one of the preceding patent claims,
**characterized in that**
the synchronization message (PTP-M) used is a PTP timestamp message with a timestamp information item and/or a PTP administration message for the administration of PTP network ports.

7. Method according to Patent Claim 6,
**characterized in that**
in cases in which both synchronization messages (PTP-M) with PTP timestamp messages and synchronization messages (PTP-M) with PTP administration messages are transmitted in encrypted form,
different keys are used in each case for encrypting PTP timestamp messages and for encrypting PTP administration messages.

8. Method according to one of Patent Claims 2 to 7,
**characterized in that**
propagation time measurement between a first and a second component involves a first encrypted synchronization message (PTP-M) being sent from the first to the second component,
**in that** a second encrypted synchronization message (PTP-M) is sent from the second to the first component in response,
the total propagation time of the first and second encrypted synchronization messages (PTP-M) being measured, and
the filler patterns (P) of the first and second synchronization messages (PTP-M) being chosen such that the first and second encrypted synchronization messages (PTP-M) each have the same block size.

## Revendications

1. Procédé de transfert codé de messages de synchronisation (PTP-M),
un message de synchronisation (PTP-M) étant inséré dans un paquet de données selon le protocole Internet,
le paquet de données présentant un en-tête IP (IP-H) et le paquet de données présentant un en-tête UDP (UDP-H), **caractérisé en ce que**
pour le transfert codé du message de synchronisation (PTP-M) le paquet de données est adressé à un port UDP réservé aux messages de synchronisation (PTP-M) codés,
**en ce que** le paquet de données est muni d'un en-tête S-PTP (S-PTP-H) prévu en outre pour le codage,
**en ce que** le message de synchronisation (PTP-M) est élargi d'un nombre pseudo-aléatoire (RN), et
**en ce que** le message de synchronisation (PTP-M) est codé conjointement avec le nombre pseudo-aléatoire (RN).

2. Procédé selon la revendication 1, **caractérisé en ce que** le bloc de données (EP), constitué du nombre pseudo-aléatoire (RN) et du message de synchronisation (PTP-M), et à coder est élargi par un motif de remplissage (P), le motif de remplissage (P) étant mesuré de manière que le bloc de données à coder (EP) atteint une grosseur de bloc prédéfinie.

3. Procédé selon la revendication 2,
**caractérisé en ce que**
on sélectionne comme grosseur de bloc prédéfinie 64 bits ou un multiple de celui-ci.

4. Procédé selon l'une des revendications précédentes,
**caractérisé en ce que**
l'en-tête S-PTP (S-PTP-H) comprend au moins des spécifications sur l'algorithme de codage utilisé et le cas échéant des spécifications sur l'utilisation d'un motif de remplissage (P).

5. Procédé selon l'une des revendications précédentes, **caractérisé en ce que** pour le codage, on utilise un procédé de codage symétrique.

6. Procédé selon l'une des revendications précédentes,
**caractérisé en ce que**
on utilise comme message de synchronisation (PTP-M) un message d'horodatage PTP avec des informations d'horodatage et/ou un message d'administration PTP pour l'administration de ports de réseau PTP.

7. Procédé selon la revendication 6,
**caractérisé en ce que**
dans les cas où autant des messages de synchronisation (PTP-M) avec messages d'horodatage PTP que des messages de synchronisation (PTP-M) avec messages d'administration PTP sont transférés codés, on utilise pour le codage de messages d'horodatage PTP et pour le codage de messages d'administration PTP, respectivement des clés différentes.

8. Procédé selon l'une des revendications 2 à 7,
**caractérisé en ce que**
pour la mesure de la durée entre un premier et un deuxième composant, on envoie un premier message de synchronisation codé (PTP-M) du premier au deuxième composant,
**en ce qu'**un deuxième message de synchronisation codé (PTP-M) est envoyé comme réponse du deuxième au premier composant,
la durée totale du premier et du deuxième message de synchronisation codé (PTP-M) est mesurée, et
le motif de remplissage (P) du premier et du deuxième message de synchronisation (PTP-M) est sélectionné de manière que le premier et le deuxième message de synchronisation codé (PTP-M) présentent respectivement une grosseur de bloc identique.
